# EUROPEAN PATENT APPLICATION

(11) **EP 1 408 619 A2**
(43) Date of publication of application: **14.04.2004**
(21) Application number: 03103733.6
(22) Date of filing: 08.10.2003
(51) Int. Cl.: H04B 1/44, H04B 1/38

(54) **wireless communication unit and integrated circuit for use therein**

(30) Priority: 10.10.2002 GB 0223538
(71) Applicant: MOTOROLA, INC., Schaumburg, IL 60196 (US)
(72) Inventor: GROSSMAN, Ovadia, 67899, Tel Aviv (IL); BEN-AYUN, Moshe, 67990, Shoham (IL); ROZENTAL, Mark, 67899, Tel Aviv (IL)
(74) Representative: McCormack, Derek James

(57) **Abstract**

A wireless communication unit (200) includes a transmitter (220) for generating a transmit radio signal and an antenna (202), operably coupled to the transmitter (220), for radiating the radio signal. An isolator circuit (226) is operably coupled between the transmitter (220) and the antenna (202) and includes a first directional coupler (310) providing a first transmission path for routing a first portion of the transmit signal and a second transmission path (320) for routing a second portion of the transmit signal. A second coupler (340) is operably coupled to the first directional coupler (310), for combining the first portion of the transmit signal and the second portion of the transmit signal and providing a combined transmit signal to the antenna (202). A radio frequency transmitter integrated circuit is also described.

In this manner, by provision of a first directional coupler and a second coupler between the transmitter and the antenna, a return path to the transmitter for signals reflected at the antenna has acceptable isolation, with minimised insertion loss.

## Description

### Field of the Invention

This invention relates to a wireless communication unit and integrated circuit for use therein. The invention is applicable to, but not limited to, a radio transmitter for use in conjunction with an antenna to increase isolation between the antenna and the radio transmitter. In particular, the radio transmitter may be one that employs a linearisation technique.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs). The term mobile station generally includes both hand-portable and vehicular mounted radio units. Radio frequency (RF) transmitters are located in both BTSs and MSs in order to facilitate wireless communication between the communication units.

In the field of this invention, it is known that continuing pressure on the limited radio spectrum available for radio communication systems is focusing attention on the development of spectrally efficient linear modulation schemes. By using spectrally efficient linear modulation schemes, more communication units are able to share the allocated spectrum within a defined coverage area (communication cell). An example of a digital mobile radio system that uses a linear modulation method, such as n/4 digital quaternary phase shift keying (DQPSK), is the TErrestrial Trunked RAdio (TETRA) system, operating according to standard procedures defined by the European Telecommunications Standards Institute (ETSI).

Since the signal envelopes of these linear modulation schemes fluctuate, intermodulation products can be generated in the power amplifier. Specifically in the personal mobile radio (PMR) environment, restrictions on out-of-band emissions are severe (to the order of -60dBc to -70dBc). Hence, linear modulation schemes used in this application require highly linear transmitters.

The actual level of linearity needed to meet particular out-of-band emission limits is a function of many parameters, the most critical of which are modulation type and bit rate. Quantum processes within a typical RF amplifying device are non-linear by nature. Only when a small portion of the consumed direct current (DC) power is transformed into radio frequency (RF) power, can the transfer function of the amplifying device be approximated by a straight line, i.e. as in an ideal linear amplifier case. This mode of operation provides a low efficiency of DC to RF power conversion, which is unacceptable for portable units.

The emphasis in portable PMR equipment is to increase battery life. Hence, it is imperative to maximise the operating efficiencies of the amplifiers used. To achieve both linearity and efficiency, so called linearisation techniques are used to improve the linearity of the more efficient amplifier classes of amplifier, for example class AB, B or C amplifiers. One such linearisation technique, often used in designing linear transmitters, is Cartesian Feedback. This is a "closed loop" negative feedback technique, which 'sums' the baseband feedback signal in its digital "I" and "Q" formats, with the corresponding generated "I" and "Q" input signals in the forward path. This 'closed loop' I-Q combination is performed prior to amplifying and up-converting this signal to its required output frequency and power level. The linearising of the power amplifier output requires the accurate setting of the phase and amplitude of a feedback signal.

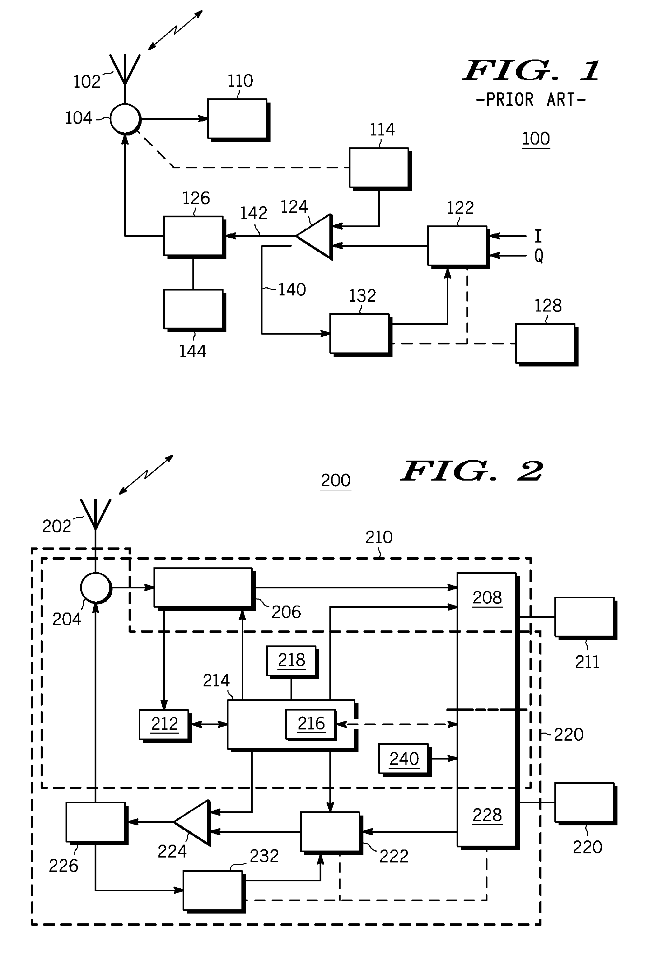

In FIG. 1, a known simplified radio communication unit 100 is shown. The simplified radio communication unit 100 includes a Cartesian Feedback transmitter circuit having a lineariser 122, an up-converter and power amplifier 124, a feedback path 140, and a down-converter 132. The feedback path 140 is arranged by sampling the power amplifier output signal, for example, by use of a directional coupler 142. Connected to the output of the power amplifier 124 is a circulator or isolator 126, which, in turn, is connected to an antenna switch 104.

The antenna switch 104 is connected to an antenna 102 and a receiver chain 110. Controller 114 controls the operation of the antenna switch. In this manner, the antenna switch routes radio frequency signals to the antenna from the transmitter when in a transmitting mode, and from the antenna to the receiver chain 110 when in a receiver mode. A microprocessor 128 controls the lineariser 122 and down-converter 132 to set the phase shift and attenuation to be applied to the feedback loop.

Details of the operation of such a lineariser is described in the paper "Transmitter Linearisation using Cartesian Feedback for Linear TDMA Modulation" by M. Johansson and T. Mattsson 1991 IEEE.

The lineariser circuit optimises the performance of the transmitter according to any desired specification, for example to comply with linearity or output power specifications of the communication system, or to optimise the operating efficiency of the transmitter power amplifier. Operational parameters of the transmitter are adjusted to optimise the transmitter performance and include as an example, one or more of the following: amplifier bias voltage level, input power level, phase shift of the signal around the feedback loop. Such adjustments are performed by say, the microprocessor 128.

Digitally modulated 'I' and 'Q' signals are input to the lineariser and eventually output as a RF signal by the power amplifier 124. A real-time Cartesian feedback loop, via the feedback path 140 and the down-converter 132, ensures a linearised output signal is fed to the antenna 102.

Due to the sensitivity of such transmitter circuits, a range of control and adjustment circuits and/or components are needed so that a linear and stable output signal can be achieved under all operating circumstances. For example, the isolator (or circulator) 126 is an essential element to prevent any high power reflections from the antenna 102, say due to any antenna mismatch, from returning to the output port of the power amplifier 124. Such reflections are known to cause damage the power amplifier. Antenna mismatches may be caused by any number of events, for example, when the antenna is placed near an object such as a human head, the radiation pattern is affected. This causes the antenna input impedance to change and the antenna to operate less efficiently, radiate less, and exhibit mismatch characteristics.

The isolator 126 is often implemented as a three-port nonlinear device that typically provides up to 10dB of isolation for the power amplifier 124. The isolator 126 uses a ferrite permanent magnet to ensure that the energy is circulated, i.e. power entering from port-1 (transmitter side) is transferred to port-2 (antenna side), from port-2 to port-3 and port-3 to port-1.
Hence, a matched (50 ohm) load 144 coupled to port-3 ensures that reflected power from a de-tuned antenna 102 will be routed to the load 144 and not be returned to the power amplifier 124.

Such a device for, suitable for use in a ultra high frequency (UHF) 400 MHz communication unit, requires a printed circuit board footprint of 6mm*6mm and costs around US$6.

Alternatively, or in addition, a lossy element may be introduced in the transmit path between the output of the power amplifier 124 and the antenna 102. Although any loss introduced in this path attenuates reflected signals, thereby increasing protection to the power amplifier, the loss also reduces the level of the transmitted signal. In this manner, the power amplifier needs to transmit at an increased power level to counteract the loss. The power amplifier 124 therefore operates inefficiently, or the radio communication unit loses coverage range as it transmits at a lower power level. Hence, this solution is impractical for subscriber units.

Thus, there currently exists a need to provide an improved transmitter circuit arrangement, wherein the abovementioned disadvantages in using a high-cost and large isolator may be alleviated.

### Summary of Invention

In accordance with a first aspect of the present invention, there is provided a wireless communication unit. The wireless communication unit includes a transmitter for generating a transmit radio signal and an antenna, operably coupled to the transmitter, for radiating the radio signal. The wireless communication unit further includes an isolator circuit, operably coupled between the transmitter and the antenna. The isolator circuit includes a first directional coupler providing a first transmission path for routing a first portion of the transmitted signal and a second transmission path for routing a second portion of the transmitted signal. A second coupler is operably coupled to the first directional coupler, for combining the first portion of the transmitted signal and the second portion of the transmitted signal and providing a combined transmitted signal to the antenna. In this manner, by provision of a first directional coupler and a second coupler between the transmitter and the antenna, there is minimum effect on the transmitted signal in the forward path, but a return path to the transmitter for transmitted signals reflected at the antenna exhibits a substantially increased isolation.

Preferably, the transmitter is a linearised transmitter, whereby the prevention of transmissions being reflected back into a feedback loop is imperative to ensure a linear stable output from the transmitter.

Furthermore, a delay element is preferably located between, and operably coupled to, the first directional coupler and the second coupler in the second transmission path to delay the second portion of the transmitted signal appearing on the second transmission path. In particular, when the delay line exhibits a substantially quarter wavelength transmission characteristic, the second coupler combines the first and second portions of the transmitted signal in phase.

In accordance with a second aspect of the present invention, a radio frequency transmitter integrated circuit is provided, as claimed in Claim 12.

Further aspects of the invention are provided in the accompanying dependent claims.

### Brief Description of the Drawings

FIG. 1 shows a block diagram of a known linear transmitter arrangement.
   Exemplary embodiments of the present invention will now be described, with reference to the accompanying drawings, in which:
FIG. 2 illustrates a block diagram of a wireless communication unit adapted to support the various inventive concepts of a preferred embodiment of the present invention; and
FIG. 3 illustrates a block diagram of a transmitter's isolation circuit adapted to support the various inventive concepts of a preferred embodiment of the present invention.

### Description of embodiments of the invention

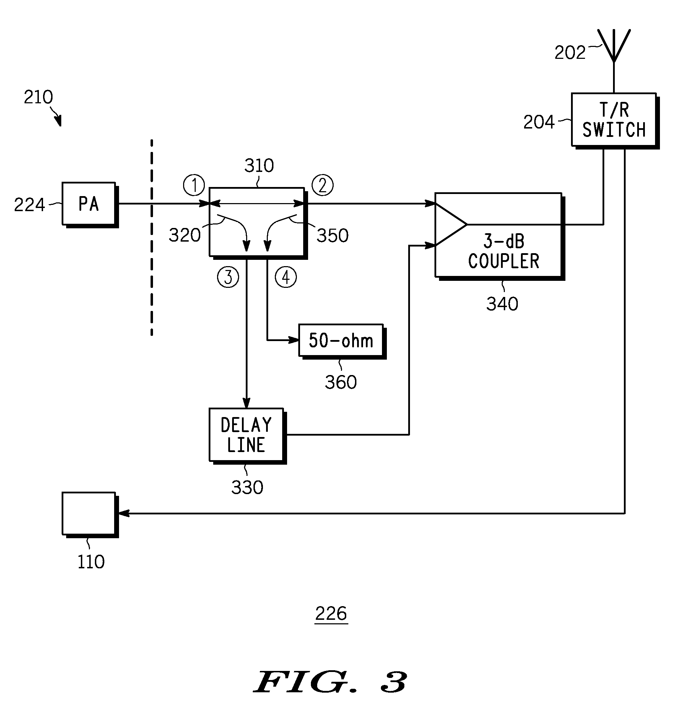

Referring now to FIG. 2, a block diagram of a wireless communication unit 200 adapted to support the inventive concepts of an embodiment of the present invention, is illustrated. For the sake of clarity, the wireless communication unit 200 is shown as divided' into two distinct portions - a receiver portion 110 and a transmit portion 220.

The wireless communication unit 200 includes an antenna 202 preferably coupled to an antenna switch 204 that provides signal control of radio frequency (RF) signals in the wireless communication unit 200, as well as isolation between the receiver 110 and transmit chain 220. Clearly, the antenna switch 204 could be replaced with a duplex filter, for frequency duplex communication units as known to those skilled in the art.

For completeness, the receiver 110 of the wireless communication unit 200 will be briefly described. The receiver 110 includes receiver front-end circuitry 206 (effectively providing reception, filtering and intermediate or base-band frequency conversion). The front-end circuit 206 is serially coupled to a signal processing function (generally realised by at least one digital signal processor (DSP)) 208. A controller 214 is operably coupled to the scanning front-end circuitry 206 to control operations thereof, e.g. so that the receiver can calculate receive bit-error-rate (BER) or frame-error-rate (FER) or similar link-quality measurement data from recovered information via a received signal strength indication (RSSI) 212 function. The RSSI 212 function is operably coupled to the front-end circuit 206. The memory device 216 stores a wide array of data, such as decoding/encoding functions and the like, as well as amplitude and phase settings to ensure a linear and stable output.

A timer 218 is operably coupled to the controller 214 to control the timing of operations, namely the transmission or reception of time-dependent signals.

As regards the transmit chain 220, this essentially includes a processor 228, lineariser circuitry (including transmitter/ modulation circuitry) 222 and an up-converter/power amplifier 224. The processor 228, lineariser circuitry 222 and the up-converter/power amplifier 224 are operationally responsive to the controller 214, with an output from the power amplifier 224 coupled to the antenna switch 204 via isolation circuitry 226.

In accordance with a preferred embodiment of the invention, improved isolation circuitry 226 has been provided. Advantageously, the isolation circuitry 226 is an inexpensive arrangement to isolate the power amplifier from receiving high power signals reflected from the antenna 202. In particular, the isolation circuitry 226 includes a magic-T. This is a linear, non-reciprocal device. It may be viewed as a directional coupler with 3dB coupling, sometimes referred to as a 3dB hybrid. In effect, it is a four-port device with port-1 being used as an input port. Port-1 is operably coupled to port-2 (for reverse power) and port-3 for the primary transmission path. When the power amplifier power is input to port-1, a first portion of the power amplifier output signal is fed to port-2 and a second portion of the power amplifier output signal is fed to port-3.

The inventors of the present invention have appreciated the benefits that can be gained from using a Magic T device, which in its basic form provides only limited isolation to the power amplifier. The earlier power amplifier linearisation schemes required full isolation to perform properly. Thus, circulators were used. With the recent development of improved linearisation algorithms, the algorithms are able to compensate for most of the antenna impedance variation. Thus, the inventors have appreciated that a reduced isolation performance is required, and that such a performance can be provided by the arrangement of the present invention.

In addition, recent improvements in power amplifier designs have also yielded reduced isolation requirements to ensure stability (i.e. avoidance of self-oscillations). The transmitter configuration of the preferred embodiment of the present invention is used to provide the isolation, instead of introducing passive loss before the antenna.

The isolation circuitry 226 is operably coupled to a feedback circuit that includes a down-converter 232, which forms together with the lineariser circuitry 222 a real-time Cartesian feedback loop to ensure a linear, stable transmitter output.

Referring now to FIG. 3, a block diagram of a transmitter circuit is illustrated, where the transmitter circuit is adapted to support the various inventive concepts of a preferred embodiment of the present invention. The transmitter circuit of the preferred embodiment of the present invention includes an isolation circuit 226 having only a few low cost components located between the power amplifier circuit 224 and the antenna 202. The output from the power amplifier circuit 224 is input to a directional coupler 310. The directional coupler 310 is preferably a 3dB magic-T coupler to minimise the power loss of the radio frequency signal in the forward transmit path. Such directional couplers are readily available. The isolation circuit 226 using the directional coupler 310 has been configured to provide a secondary transmission path that samples a portion of the main transmission path in both the forward and reverse direction. Hence, the magic-T directional coupler 310, in the preferred embodiment of the present invention, is configured to provide an alternative forward transmission path 320 to the antenna 202, whilst increasing the isolation of the power amplifier 224 from reflections from the antenna 202.

Notably, the forward transmission path 320 routes the sampled portion of the transmitted signal via a delay line 330 on the alternative transmission path 320. The output from the delay line 330 is then re-combined into the main transmission path signal in a second coupler 340. The second coupler 340 is preferably a 3dB three-port coupler to, again, minimise the power loss of forward transmit signals between the output of the P.A. 240 and the antenna 202.

The delay line is configured as a quarter wave integrated or component-based delay line, to ensure that the alternative transmission path is optimally combined into the primary transmission path within the second coupler 340. The delay line 330 effectively phase equalizes the primary transmission path with the alternative transmission path to enable optimal summing in the second coupler prior to signal injection at the antenna 202. It is noteworthy that the alternative transmission path has minimal energy loss, notwithstanding a component insertion loss of about 0.3db. In an enhanced embodiment of the present invention, it is envisaged that the delay line 330 is incorporated within the directional coupler or magic T device 310.

Advantageously, the isolation circuit 226 provides power amplifier (PA) isolation from any antenna impedance variations. Furthermore, the isolation circuit 226 exhibits a nominal return loss value of 3db. This is a significant improvement over known isolation circuits. A particular feature of the present invention is that with the antenna 202 removed a performance of equivalent to a voltage standing wave ratio (vswr) of approximately 5.8:1 is achieved without affecting the radiated power. The actual in circuit protection, taking into account the insertion loss of the different serial components before the antenna, will therefore provide about 6db return loss (RL) with a vswr of 3:1.

Although this vswr performance is not as good as an actual ferrite isolator, such P.A. buffering isolation is made at a fraction of the cost, with lower insertion loss.

In accordance with the preferred embodiment of the present invention, port-4 of the magic-T coupler is connected to a matched 50ohm load. In this regard, the reverse path in the directional coupler 310 routes the majority of the reflected signals into the 50 ohm matched load.

In the reverse direction, let us examine the worst-case performance of a disconnected, and thus mismatched, antenna 202. The improved isolation from the power amplifier with respect to reflected energy from antenna mismatches results from the following. The reflected energy is routed through the 3db coupler 340 to port-2 (50%) and port-3 (50%) of the magic T 310. At port-2 the reflected energy is further reduced (in half) between port-4 and port-1. Thus, approximately 25% of the reflected energy is routed back to the power amplifier. At port-3 the reflected energy is similarly divided (in half) between port-1 and port-4. Thus, the reflected energy is then distributed evenly between the primary transmission path and the 50ohm load termination at port-4. In this manner, a nominal 3db protection is achieved.

In this manner, a cost effective solution is provided that enables the transmitter output to be stabilised and removes the need for a large and costly circulator or isolator. The cost saving is approximately 90%. Furthermore, the footprint saving by removing the circulator or isolator is more than 80%. The actual protection from the extra components depends on the insertion loss of the respective components. However, a typical insertion loss around 4db is to be expected.

In the preferred embodiment of the present invention, the directional coupler is preferably an integrated on chip 90-degree phase shift magic-T, coupler.

Advantageously, the inventive concepts of the present invention provide a significant improvement to the performance of linearised transmitter circuits. However, it is within the contemplation of the invention that the isolation circuits 226 of the preferred embodiment of the present invention may be applied to any radio transmitter circuit.

It is also within the contemplation that other transmitter circuit arrangements may benefit from the inventive concepts described herein. For example, two such circuits arranged in series would provide double the isolation, if required.

Furthermore, it is envisaged that integrated circuit manufacturers may utilise the inventive concepts hereinbefore described. For example, it is envisaged that a radio frequency transmitter integrated circuit (IC) containing the aforementioned transmitter circuit arrangement could be manufactured and sold to be incorporated into a wireless communication unit.

It is also within the contemplation of the invention that alternative linearisation techniques can benefit from the inventive concepts described herein. The invention is therefore not to be considered as being limited to Cartesian feedback. For example, as an alternative to using Cartesian feedback, a pre-distortion form of lineariser may be adapted to implement the preferred or alternative embodiments of the present invention. Y. Nagata described an example of a suitable pre-distortion transmitter configuration in the1989 IEEE paper titled "Linear Amplification Technique for Digital Mobile Communications".

It will be understood that the radio communication units and radio transmitter circuits, as described above, provide at least the following advantages:
(i) The proposed circuit provides transmitter power amplifier buffering with minimal insertion loss. In this manner, the buffering reduces the power level of any reflected signal, say due to an antenna mismatch, thereby minimizing a risk of self-oscillations in the power amplifier.
(ii) It is possible to provide a linearised transmitter configuration without the need to include a costly and bulky ferrite isolator or circulator.
(iii) The power amplifier is protected from detuning of the antenna or mis-matching of the antenna input impedance, thereby also minimising a risk of power amplifier overheating.
(iv) The level of isolation is controllable.

Whilst specific, and preferred, implementations of the present invention are described above, it is clear that one skilled in the art could readily apply further variations and modifications of such inventive concepts.

Thus, a wireless communication unit has been described that substantially addresses the problems associated with isolating the power amplifier from the antenna with regard to mismatched reflection of signals, whilst providing a low loss and low cost solution.

## Claims

1. A wireless communication unit (200) including:
a transmitter (220) for generating a transmit radio signal; and
an antenna (202), operably coupled to said transmitter, for radiating said radio signal;
and an isolator circuit (226), operably coupled between said transmitter and said antenna, wherein said isolator circuit includes:
a first directional coupler (310) providing:
a first transmission path for routing a first portion of said transmit signal, and
a second transmission path (320) for routing a second portion of said transmit signal; and
a second coupler (340) operably coupled to said first directional coupler, for combining said first portion and said second portion of said transmit signal and providing a combined transmit signal to said antenna.

2. The wireless communication unit according to Claim 1, further including a delay element (330) located between said first coupler and said second coupler in said second transmission path to delay said second portion of said transmit signal appearing on said second transmission path.

3. The wireless communication unit according to claim 2, wherein said delay element (330) is a substantially quarter wave-length transmission line to ensure said first portion of a transmit signal and said second portion of a transmit signal are phase combined prior to said antenna.

4. The wireless communication unit according to Claim 2 or Claim 3, wherein the delay element is incorporated as a transmission line in the directional coupler.

5. The wireless communication unit according to any one preceding Claim, wherein said first directional coupler (310) comprises a four-port device.

6. The wireless communication unit (200) according to Claim 5, wherein said four-port device comprises a magic-T 3dB hybrid device.

7. The wireless communication unit (200) according to Claim 5 or Claim 6, wherein a fourth port of said four-port device is operably coupled to a matched load to receive reflected transmissions from said antenna (202).

8. The wireless communication unit (200) according to any one preceding Claim, wherein said second coupler (340) is a 3dB three-port device.

9. The wireless communication unit (200) according to any one preceding Claim, wherein said transmitter (220) is a linearised transmitter circuit, such that said isolation circuit provides protection for said linearised transmitter circuit from a transmitted signal reflected from said antenna.

10. The wireless communication unit according to any one preceding Claim, wherein said wireless communication unit is capable of operation according to TETRA communication standards.

11. The wireless communication unit according to any one preceding Claim, wherein said wireless communication unit is a subscriber unit or a base transceiver station.

12. A radio frequency transmitter integrated circuit comprising:
a transmitter;
an antenna port, operably coupled to said transmitter, for operable coupling to an antenna to radiate a radio signal output from said radio frequency transmitter integrated circuit;
the radio frequency transmitter integrated circuit **characterised by**:
an isolator circuit, operably coupled between said transmitter and said antenna port, wherein said isolator circuit includes:
a first directional coupler providing a first transmission path for routing a first portion of said transmitted signal and a second transmission path for routing a second portion of said transmitted signal; and
a second coupler operably coupled to said first directional coupler, for combining said first portion and said second portion of said transmitted signal and providing a combined transmitted signal to said antenna port.
